# EUROPÄISCHE PATENTANMELDUNG

(11) **EP 3 693 716 A1**
(43) Veröffentlichungstag der Anmeldung: **12.08.2020**
(21) Anmeldenummer: 19020065.9
(22) Anmeldetag: 11.02.2019
(51) Int. Cl.: G01M 5/00

(54) **ELEKTRONISCHES ÜBERWACHUNGS- UND MONITORINGSYSTEM FÜR HOCHSPANNUNGSMASTEN, SOWIE HOLZ-, BELEUCHTUNGS- UND OBERLEITUNGSMASTEN**

(71) Anmelder: ABECO BSM GmbH, 47638 Straelen (DE)
(72) Erfinder: BILGIN, Halil, 52078 Aachen (DE)

(57) **Zusammenfassung**

Gegenstand der Erfindung ist ein konfigurierbares autarkes Messsystem zur Prüfung der Schwingungsfrequenz an der befestigten Stelle des Mastes. Optional mit weiteren Sensoren hat das Messsystem auch die Möglichkeit eine Elektrische Fault-Detection zu identifizieren. Dies wird mit einem optionalen Sensor anhand der Erfassung einer ungewöhnlichen Magnet- und elektrischem Feld-Änderung ermittelt.

Der System-Aufbau hat folgende Übersicht:
- Zentrale Servereinheit mit Datenbank zur Sammlung der Ergebnisdatendaten
- Ein grafisches und tabellarisches Dashboard zur einfachen Anzeige des aktuellen Überwachungsbereiches
- Schnittstellen zur konfigurierbaren Alarmierung der Noteinsatzleitstelle (Email, SMS, Anruf)
- Gateway's als Datenübermittler. (Funk zu Messystemen und LAN/WAN/DSL/Mobilfunk zum Server
- Messsystemen mit Funkeinheit, Recheneinheit / Mikrocontroller, Sensorik und Energieversorgung

## Beschreibung

### 1. GEBIET DER ERFINDUNG

Die Erfindung befindet sich auf dem Gebiet des Hochbaus und betrifft ein Verfahren zur Überwachung des Zustandes von stehend verankerten Masten mit baulich vorgegebener ein- oder mehrseitiger Belastungsrichtung **sowie** eine entsprechende Messvorrichtung (Messgerät) mit der integrierten Nachrichtenübertragung, -verarbeitung und zeitnahen Alarmierungsmeldung. Das Einsatzgebiet der Erfindung umfasst verankerte Masten wie
a) Hochspannungsmasten als Stahlgitterkonstruktionen
b) Holzmasten, Betonmasten und Aluminiummasten
c) Strassenbeleuchtungsmasten
d) Telekommunikationsmasten
e) Freileitungen für Bahn, Straßenbahn usw.
f) Masten für Freileitungen (Spannung und Telekommunikation)
g) Zukünftig auch neue Mast-Systeme wie beispielsweise die Vollwandmasten der Firma Amprion.

### 2. STAND DER TECHNIK

Stehend verankerte Masten sind Teil unserer technischen Infrastruktur. Sie sind Tragesysteme für Straßenbeleuchtung, Objektbeleuchtung, Strom- und Telekommunikationsleitungen sowie für Oberleitungen von Straßen- und Eisenbahnen. Die Zahl der allein in Deutschland in den letzten 5 Jahrzehnten errichteten Masten bemisst sich nach Hunderttausenden. Die Anzahl der Masten wird durch die Energiewende noch erhöht werden, da sie den Bau neuer Stromleitungen erfordert. Neue Trassen von mehreren tausend Kilometer Länge sind nach Einschätzung der Bundesregierung nötig, um den Überschuss an Windenergie aus Norddeutschland nach Süddeutschland abzutransportieren. Denn dort fehlt es wegen des Atomausstiegs an Kraftwerkskapazitäten.

Ein großer Teil dieser Objekte ist freistehend und damit vielfachen Umwelteinflüssen, aber auch Unfallsituationen ausgesetzt. Die Lebensdauer der Masten ist zwar grundsätzlich auf mehrere Jahrzehnte ausgelegt, kann sich aber durch Korrosion, Überlastung und insbesondere Wind und Schneefall stark verkürzen. Da von einem Mast, der seine Standfestigkeit eingebüßt hat, ein hohes Gefahrenpotential ausgeht, ist eine regelmäßige Kontrolle erforderlich.

Besonders problematisch sind solche Masten, die eine einseitige Belastung aufweisen und daher durch die Gravitation konstant in eine Richtung gezogen werden. Dazu zählen insbesondere alle Masten mit Abspannungen (Drahtseilen), aber auch solche mit seitlichen Auslegern, die etwa Ampeln oder schwere Oberleitungen tragen, sind betroffen. Das Problem verschärft sich bei Masten, die freistehend sind, weil hier die Windlast noch hinzuaddiert werden muss.

Durch Überlastung, Schwächungen und Korrosion kommt es zu Materialermüdungen, Rissen und Materialabplatzungen, was dazu führt, dass Masten ihre Lage zur ursprünglichen Senkrechten in Richtung der vorhandenen Belastung verändern und dann früher oder später umkippen oder durchbrechen. Diese Ereignisse lassen sich kaum statistisch vorhersagen, d.h. ein 30 Jahre alter Mast kann sehr wohl noch stabil sein, während ein anderer dringend ausgewechselt werden muss, weil er begünstigt durch besondere Standortbedingungen durch Rissbildung und Korrosion am Fundament einen großen Teil seiner Stabilität bereits 5 Jahre nach der Errichtung eingebüßt hat. Auch lokal betrachtet, gibt es hier keine Regel: so kann von Masten in einer Reihe genau einer labil sein, weil es hier zufällig einmal zu einer Beschädigung gekommen ist.

Sicherheitsüberprüfungen vor Ort in Form von Biegemomentprüfungen, Ultraschallmessungen und Schwingungstext sind daher nicht nur wegen Sicherheitserfordernissen, sondern auch aus ökonomischen Überlegungen dringend erforderlich und tatsächlich auch aus dem Stand der Technik hinreichend bekannt. Diese werden in den gesetzlich vorgeschriebenen Zyklen entsprechend du rchgefü h rt.

Die Sicherheitsprüfung wird dadurch erschwert, dass die Masten gewöhnlich an wenig zugänglichen Stellen, beispielsweise entlang einer Eisenbahnlinie stehen. Weder ist es möglich, die entsprechenden Verkehrswege für den Zeitraum der Prüfung stillzulegen noch können auf wendige Messapparaturen vor Ort gebracht und dann von Mast zu Mast weiterbewegt werden. Bei den Hochspannungsmasten ist der Zustand durch die Verteilung sowie Ausdehnung in großer Landschaftsfläche (wie im Gebirge und bewaldeten Gebieten) und die Größe der Bauten zum Teil enorm aufwendig. Hier werden teilweise durch kostenintensive Hubschraubereinsätze die Metallstrukturen und die Leitungsbefestigungen untersucht. Eine Überprüfung durch Drohneneinsatz mit hochauflösenden Kameras ist ebenfalls nur durch hohen manuellen Einsatz-Aufwand von Drohnenpiloten möglich.

Da die Prüfung nur zeitlich Zyklisch durchgeführt wird, kann eine spontan entstandene Beschädigung und damit verbundene Gefahren- oder Ausfallsituation nicht zeitnah ermittelt und lokalisiert werden.

Die Aufgabe der vorliegenden Erfindung hat daher darin bestanden, ein Verfahren sowie eine entsprechende Vorrichtung zur Verfügung zu stellen, die die Nachteile des Stands der Technik überwinden. Konkret sollte das Verfahren es ermöglichen, unmittelbar und zuverlässig Informationen über die Kondition der Standfestigkeit von Hochspannungsmasten mit ein- oder mehrseitiger Belastungsrichtung zu erhalten, die sogar eine Beschädigung in Form einer Konditionsänderung des Zustandes vorhersagen kann. Das Verfahren sollte es ferner gestatten, Masten "wiederzuerkennen", also so ausgelegt sein, dass ein Vergleich des aktuellen Zustands mit dem der letzten Prüfung sofort möglich ist und eine gefährliche Änderung des Status Quo unmittelbar feststellen kann. Schließlich sollte das Verfahren so ausgelegt sein, dass mit Hilfe einer leichten und transportablen Vorrichtung die Installation einfach durchgeführt werden kann.

### 3. BESCHREIBUNG DER ERFINDUNG

Gegenstand der Erfindung ist ein konfigurierbares autarkes Messsystem zur Prüfung der Schwingungsfrequenz an der befestigten Stelle des Mastes. Optional mit weiteren Sensoren hat das Messsystem auch die Möglichkeit eine Elektrische Fault-Detection zu identifizieren. Dies wird mit einem optionalen Sensor anhand der Erfassung einer ungewöhnlichen Magnet- und elektrischem Feld-Änderung ermittelt.

Der System-Aufbau hat folgende Übersicht:
- Zentrale Servereinheit mit Datenbank zur Sammlung der Ergebnisdatendaten
- Ein grafisches und tabellarisches Dashboard zur einfachen Anzeige des aktuellen Überwachungsbereiches
- Schnittstellen zur konfigurierbaren Alarmierung der Noteinsatzleitstelle (Email, SMS, Anruf)
- Gateway's als Datenübermittler. (Funk zu Messystemen und LAN/WAN/DSL/Mobilfunk zum Server
- Messsystemen mit Funkeinheit, Recheneinheit / Mikrocontroller, Sensorik und Energieversorgung

Das Messverfahren (die Erfindung)
- Definition der Toleranzfrequenzbereiche anhand der Statikberechnungen der zu überwachenden Masten.
- Montage der Messsysteme an die Masten.
- Messung der Beschleunigung in drei Achsen an den Stellen, wo die Messsysteme angebracht sind.
- Aufnahme der Messdaten in einer Zeitspanne (Schwingungsabbild), die es ermöglicht mindestens eine jedoch für gewöhnlich mehrere Schwingungs-Frequenzen abzuleiten.
- Berechnung der stärksten Frequenzen aus dem Schwingungsabbild.
- Prüfung der Frequenzen, ob diese innerhalb oder außerhalb der vorher definierten Toleranzen liegen.

Das Messsystem (die Erfindung) als eine Einheit besteht jeweils aus folgenden Komponenten:
1. Zentraler Mikrocontroller zur Steuerung des gesamten Überwachungsprozesses
2. Integrierte (Embedded) Software im Mikrocontroller, mit folgender Funktionalität.
   a. Start der eigenen Zustandsermittlung, Genereller Selbsttest (Sensorik, Batterie, letzte Messergebnisse, Fehler-Log usw.)
   b. Start und Initialisierung der Messung durch vorkonfigurierbare Ereignisse (Schwingung oder mechanische Anregung / Beschleunigung in eine Richtung oder nach einem konfigurierbaren Zeitintervall (Tag, Woche, Monat etc.))
   c. Speicherung der Messdaten
   d. Ermittlung der ersten Eigenfrequenzen aus der Messung durch eine Fourier Transformation. Wobei die Anzahl der Eigenfrequenzen ebenfalls konfigurierbar ist.
   e. Prüfung der Eigenfrequenzen, ob diese in vorgegebenes Muster passen. Dabei werden drei Situationen betrachtet. Das Vorgegebene Muster ist ein Resultat der Statik Berechnung der Masten, die grundsätzlich dem Betreiber bzw. Verantwortlichen vorliegt.
      i. Alles ok (OK)
      ii. Leichte Abweichung erkannt (LOW)
      iii. Starke Abweichung erkannt (HIGH)
   f. Start der Datenübermittlung, Versand der eigenen eindeutigen Identifikations-ID, Eigener Systemzustand und Messergebnis (Ok, Mid, High)
   g. Funk-Übertragungs-Protokoll mit Verschlüsselung.
3. Sensoreinheit
   a. 3 Achsen Beschleunigungssensor
   b. Elektrischer und magnetischer Feld-Sensor (Optional)
   c. Temperatursensor (Optional)
   d. GPS Sensor (Optional)
   e. 3 Achsen Gyroskop (Optional)
   f. Lichtsensor (optional)
4. Ladecontroller
5. Solareinheit
6. Aufladbarer Akkumulator
7. Induktionseinheit, Energie-Aufnehmer als zweite energiequelle für die Akkuladung (optional)
8. Funkmodul im Sub GHz Bereich, (braucht keine Lizenzierung) Optional genutzte Systeme:
   a. Proprietäres Sub GHZ Modul
   b. Verwendung von LoRa (Long Range Funk Modulen)
   c. Verwendung von SigFox oder ZigBee FunkSystemen
   d. Verwendung von GSM (GPRS, 2G EDGE, 3G, LTE, 5G)
9. Verschlüsselungsmodul zur Sicherheit der Daten und Schutz vor Manipulationen.
10. Konfigurationsschnittstellen optional Bluetooth und NFC.
11. Zeitgeberquarz
12. Gehäuse des Messsystems
   a. Mechanischer Schutz vor Witterungsbedingungen (Wärme, Licht, Feuchtigkeit)
   b. Schutz vor Magnet- und Elektrischen Feldern
   c. Mit integrierter Befestigunsvorrichtung zum einfachen und sicheren Montieren des Systems an die vorgesehenen Messpunkte.
   d. Die Befestigungsmethoden unterscheiden sich in:
      i) Montage an Strommasten (entsprechende Metallstruktur zum Klemmen mit optionaler magnetischer Einrast-/Schnappfunktion)
      ii) Montage an Masten mit rundem Durchmesser oder Holzsmasten (Rohrbefestigungsschnalle / -schelle)

Das Funkübertragungsverfahren:
1. Es werden Systematisch zwei unterschiedliche Funkübertragungsverfahren verwendet
   a) Nutzung vorhandener Protokolle wie LoRa, ZigFox, SigBee etc.
   b) Nutzung des eigen entwickelten Protokolls.
2. Das eigen entwickelte Datenübertragungsprotokoll ermöglicht
   a. Die Übertragung von Daten über die notwendige Distanz (bis zu 2.000m im freien Feld)
   b. Die Datenübertragung nutzt extrem niedrige Energie (unter Verwendung von Low Power Sub 1GHz Transceivern)
   c. Als Grundlage dient das Feld-BUS-System.
   d. Die Übertragungsdaten haben eine konfigurierbare feste Daten-Länge. Diese wird bei der Installation der Systeme bestimmt, da die Anzahl der in einem Gebiet installierten Messsysteme die Länge der Datenkette bestimmt. Es wird außerdem noch ein Puffer eingebaut, sodass ca. 10% mehr Messsysteme später aufgenommen werden können.
   e. Jedes Messsystem hat seine eigene Position in der Daten-Kette, die jedes Mal übertragen wird.
   f. In der Datenkette werden Informationen über die ID des Messsystems zur Identifikation (wo kommt die Messung her) sowie der Messzustand (erfolgreich Gemessene Werte, Problemmeldungen, Systemzustand etc.) übertragen
   g. Die Messergebnisse sollen maximal 1x pro Tag übertragen werden. In kritischen Umgebungen, können auch mehr Übertragungen an einem Tag stattfinden. Diese kann bei der Implementation konfiguriert werden.
   h. Der Datenübertragungsprozess sieht vor, dass alle vorliegenden Messergebnisse an das Gateway übertragen werden.
   i. Das System hat eine Ausfalltoleranz, sodass innerhalb eines Gebietes mehrere Messsysteme ausfallen können, ohne dass die Datenübertragung der funktionierenden Messsysteme gestört wird.

Das erfindungsgemäße Messsystem und das Verfahren zeichnen sich durch besondere Eigenschaften aus. An dem zu überwachenden Mast werden an den Äußersten Stellen jeweils ein Messsystem angebracht, die als autonome Sensorsysteme für das Gesamtsystem dienen, mit dessen Hilfe die Schwingungen erfasst werden. Weist der Mast eine Schwingung aus, die außerhalb der tolerierbaren Eigenfrequenzen liegt, wird eine Alarmierung durchgeführt.

Je nach Masttyp werden Messsysteme in unterschiedlicher Anzahl befestigt. Bei Hochspannungsmasten werden an den jeweiligen Außenpunkten der Trassenspitzen und an der oberen Höchstpunkt je ein Messsystem angebracht.

Die Zuvor ermittelten Eigenfrequenzen und die Toleranzen für die Alarmierung werden bei der Montage der Messsysteme oder bei bestehenden Daten vorher in die Messsysteme Konfiguriert. Anschließend findet eine automatische Kalibrierung der Funkmodule statt.

Die Datenübertragungstechnik nutzt die bekannte Mesh-Technologie und baut somit ein Wireless-Profibus ähnliches System auf. Durch dieses Modell können über die Funkmodule die Messsysteme eine Zeitsynchronisation durchführen. Bis zu 16.000 Messsysteme können Ihre Daten übermitteln bis die gesamte Nachrichtenkette bei einem Gateway ankommt und diese zur Überwachung an den zentralen Datenbank-Server weiterleitet.

Durch die Verwendung von Ultra-Low-Power Komponenten und der Solarenergie, werden die Messsysteme mit dem aufladbaren Akku eine Lebensdauer von ca. 5 Jahren erhalten.

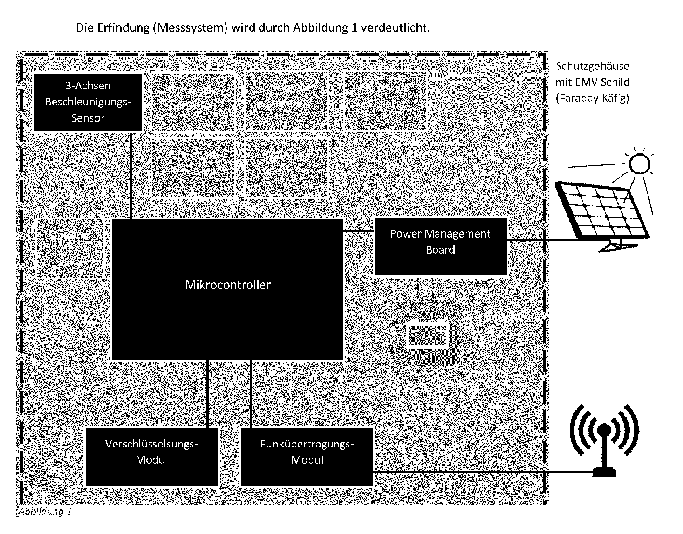

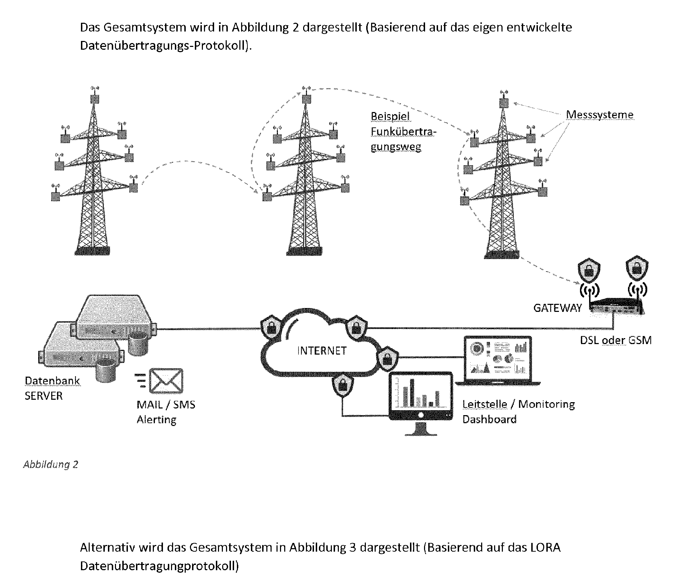

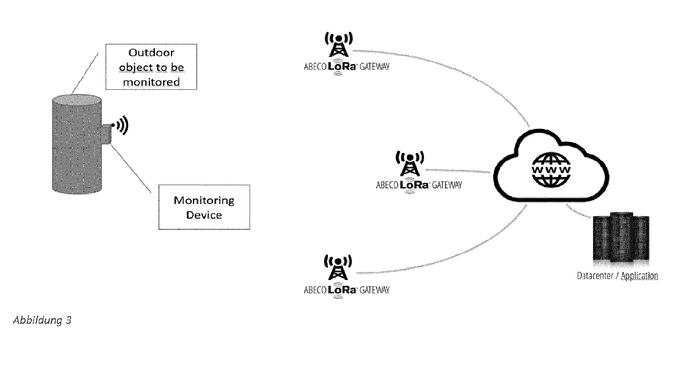

## Patentansprüche

1. **Verfahren zur Überwachung und Monitoring von Masten**
(a) Aufbau der Monitoringstruktur
i) Datenbankserver mit GUI und Frontend Monitoring
ii) Gateways, zum Einsammeln der Funkdaten von dem Messsystemen und Übermittlung an den Datenbankserver.
iii) Messsysteme mit Kopplung an die Gateways über Funk
iv) Konfiguration der Zeitsynchronisation, basierend auf der Entfernungen der einzelnen Messsysteme zueinander.
(b) Konfigurierbare Alarmierungsstufen im Messsystem
(c) Anbringen der Messsysteme an die Masten mit besonderer Montagevorrichtung am Messsystem
(d) Messung der Schwingungen an den Messpunkten
(e) Konfigurierbare automatische Initialisierung der Messung
(f) FFT Analyse aus den Schwingungsmessungen
(g) Ermittlung der Risiko / Gefahrenstufe einer Beschädigung
(h) Elektronische Meldung einer Beschädigung (Eigen entwickelte Übertragungsprotokoll)

2. **Verfahren nach Anspruch 1, dadurch gekennzeichnet, dass man Masten prüft, bei denen es sich um Träger von Spannungsleitungen, Telekommunikationsleitungen oder Beleuchtungen handelt.**

3. **Verfahren nach Anspruch 1 und 2, dadurch gekennzeichnet, dass man Masten prüft, die aus Beton, Stahl, Aluminium, Carbonfaser, Holz oder aus deren Verbindugen gefertigt sind.**

4. **Ein Messsystem, dass die Kondition und Zustand der Masten über seine Eigenschwingungen ermittelt und in kritischen Situationen warnt und Alarmiert**

5. **Ein Funkübertragungsprotokoll, das die Übermittlung der Daten in Form eines Mesh-Netzwerkes über längere Distanzen zum nächsten Gateway übermittelt.**

6. **Vorrichtung zur Standsicherheitsprüfung von stehend verankerten Masten mit vorgegebener Belastungsrichtung, umfassend**
(a) Zentrale Servereinheit mit Datenbank zur Sammlung der Ergebnisdatendaten
(b) Ein grafisches und tabellarisches Dashboard zur einfachen Anzeige des aktuellen Überwachungsbereiches und der Situation der Masten.
(c) Schnittstellen zur konfigurierbaren Alarmierung der Noteinsatzleitstelle (Email, SMS, Anruf)
(d) Gateway's als Datenübermittler. (Funk zu Messsensoren und LAN/WAN/DSL/Mobilfunk zum Server
(e) Messsystemen mit Funkeinheit, Recheneinheit / Mikrocontroller, Sensorik und Energieversorgung
